# EUROPEAN PATENT SPECIFICATION

(11) **EP 0 624 315 B1**
(45) Date of publication and mention of the grant of the patent: **01.07.1998**
(21) Application number: 94106124.4
(22) Date of filing: 20.04.1994
(51) Int. Cl.: A01N 55/08, C07F 5/02

(54) **Diaryl(pyridinio and isoquinolinio) boron fungicidal agents**
Fungizide Diaryl(Pyridin und Isochinolin) Borverbindungen
Agents fongicides de diaryle (pyridino et isoquinolino) de bore

(30) Priority: 07.05.1993 US 59048; 07.05.1993 US 59143
(43) Date of publication of application: 17.11.1994
(73) Proprietor: AMERICAN CYANAMID COMPANY, Wayne New Jersey 07470 (US)
(72) Inventor: Patel, Bomi P., Philadelphia, Pennsylvania 19147 (US)
(74) Representative: Wächtershäuser, Günter, Prof. Dr.

(56) References cited:
- EP-A- 0 153 885
- EP-A- 0 432 987
- CH-A- 410 518
- FR-A- 2 071 171
- US-A- 3 062 708
- US-A- 3 517 017
- BULLETIN DE LA SOCIETE CHIMIQUE DE FRANCE, no.6, 1966, PARIS FR pages 1981 - 1992 J.SOULIE ET AL. 'Composés acétyléniques du bore: I.Arylalcynylbores, pyridines'
- JOURNAL OF THE CHEMICAL SOCIETY, 1958, LETCHWORTH GB pages 2895 - 2897 E.W.ABEL ET AL. 'Back-co-ordination from Oxygen to Boron in Organoboron Compounds.'
- CHEMICAL ABSTRACTS, vol. 57, no. 13, 24 December 1962, Columbus, Ohio, US; abstract no. 16641f, B.M.MIKHAILOV ET AL. 'Organoboron compounds. LXXXVIII. Reactions of diarylboron chlorides with aromatic amines and heterocyclic bases'
- CHEMICAL ABSTRACTS, vol. 114, no. 3, 21 January 1991, Columbus, Ohio, US; abstract no. 24001, S.I.POMBRIK ET AL. 'A FLUORINE-19 NMR STUDY OF THE TRANSMISSIVE ABILITY OF BORON-CONTAINING BRIDGED SYSTEMS WITH THREE- AND FOUR-COORDINATED BORON ATOMS'
- CHEMICAL ABSTRACTS, vol. 51, no. 12, 25 June 1957, Columbus, Ohio, US; abstract no. 8675, B.M.MIKHAILOV ET AL. 'Organoboron Compounds. XIV. Reaction of organic bases with diphenylboron chloride.'
- DATABASE WPI Week 8803, Derwent Publications Ltd., London, GB; AN 88-016584 [03] & JP-A-62 277 307 (SDS BIOTECH) 2 December 1987

## Description

### BACKGROUND OF THE INVENTION

Phytopathogenic fungi are the causal agents for many diseases that infect and destroy crops. In particular, the diseases apple scab, grape downy mildew, tomato early blight and grape and pepper botrytis are especially devastating.

The leaves and fruit of apple trees are susceptible to attach by a fungus, Venturia inaequalis, resulting in a disease called apple scab. The disease occurs wherever apples are grown, but is most common in the United States and Europe. Uncontrolled, apple scab results in deformed, low quality fruit.

Tomatoes are also susceptible to diseases caused by fungi. For example, the foliage, stem and fruit of the tomato plant may be attached by a fungus, Alternaria solani, resulting in a disease called tomato early blight. Tomato early blight is particularly destructive in regions with wet or humid climates. Uncontrolled, tomato early blight causes the defoliation of the tomato plant, resulting in reduced fruit number and size.

Grapes and peppers are susceptible to attach by the fungus, Botrytis cinerea, causing grape botrytis and pepper botrytis, respectively. Grape botrytis, for example, is an especially destructive disease that destroys the cell walls of the fruit, resulting in bunch rot. Grape botrytis may occur in any grape vineyard, but is most prevalent in Europe.

In spite of the commercial fungicides available today, diseases caused by fungi still abound. Accordingly, there is ongoing research to create new and more effective fungicides for controlling or preventing diseases caused by phytopathogenic fungi.

In addition insects and acarina destroy growing and harvested crops. In the United States alone, agronomic crops must compete with thousands of insect and acarid species. In particular, tobacco budworms, southern armyworms and two-spotted spider mites are especially devasting to crops.

Tobacco budworms cause tremendous economic losses in agronomic crops. In particular, budworms devastate cotton crops by feeding on green bolls. Control of budworms is complicated by their resistance to many common insecticides, including organophosphates, carbamates and pyrethroids. Also, budworm larvae are difficult to control with currently available insecticides once they reach the third instar.

Two-spotted spider mites attach many plant species, raspberry plants for example, by removing sap from leaves. When raspberry plants are heavily infested, canes and leaves become stunted. With a severe infestation, fruiting canes are damaged, resulting in reduced yield and fruit quality.

US-A-3,062,708 and EP-A-0 432 987 disclose a method for controlling phytopathogenic fungi and compounds and compositions for use in said method. The compounds according to US-A-3,062,708 are optionally substituted triphenylborane complexes. The compounds according to EP-A-0 432 987 are borane complexes with an optionally substituted imidazole ring.

JP-A-62277307 discloses optionally substituted triphenylborane compounds as insecticidal and miticidal agents.

Heteroatom Chemistry (1990), Vol. 1, No. 4, pages 327 to 332 discloses a complex between bis(3,4,5-trichlorophenyl)boronic acid and pyridine.

It is therefore an object of the present invention to provide compounds which are highly effective for controlling or preventing phytopathogenic fungal infestations in agronomic crops, both growing and harvested.

It is also an object of the present invention to provide a method for the prevention, control or amelioration of a disease caused by a phytopathogenic fungus.

It is a further object of the present invention to provide a method for controlling insects and acarina by contacting said insects and acarina, their breeding ground, food supply or habitat with an insecticidally or acaricidally effective amount of a diaryl(pyridinio or isoquinolinio)boron compound.

It is also an object of the present invention to provide a method for protecting growing plants from attack by insects and acarina by applying to the foliage of said plants or to the soil or water in which they are growing an insecticidally or acaricidally effective amount of a diaryl(pyridinio or isoquinolinio)boron compound.

These and other objects of the present invention will become more apparent from the detailed description thereof set forth below.

### SUMMARY OF THE INVENTION

The present invention describes certain diaryl(pyridinio and isoquinolinio)boron compounds which are useful as fungicidal, insecticidal, and/or acaricidal agents.

The present invention also includes a method for the protection of a plant, plant seed or tuber from fungal infestation and disease which comprises applying to the plant, plant seed or tuber, or to the medium or water in which it is growing, a fungicidally effective amount of a compound having the structural formula 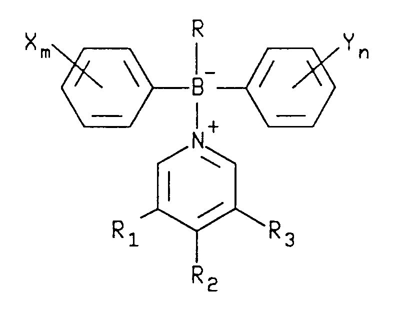 wherein
- X and Y: are each independently halogen, C₁-C₈ alkyl, C₁-C₈ haloalkyl, C₁-C₈ alkoxy or C₁-C₈ haloalkoxy;
- m and n: are each independently an integer of 0, 1, 2 or 3;
- R: is C₁-C₈ alkyl, C₁-C₈ alkoxy, halogen or hydroxy;
- R₁, R₂ and R₃: are each independently hydrogen, C₁-C₈ alkyl, C₁-C₈ haloalkyl, C₁-C₈ alkoxy, C₁-C₈ haloalkoxy, halogen, cyano, nitro, C(O)R₄, NR₅R₆ or phenyl optionally substituted with one to three halogen, C₁-C₄ alkyl, C₁-C₄ haloalkyl, C₁-C₄ alkoxy, C₁-C₄ haloalkoxy or NR₅R₆ groups, and when taken together, R₂ and R₃ may form a ring in which R₂R₃ is represented by the structure: -(CH₂)ₚ- or 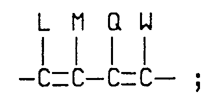
- R₄, R₅ and R₆: are each independently hydrogen or C₁-C₄ alkyl;
- p: is an integer of 3 or 4; and
- L, M, Q and W: are each independently hydrogen, halogen, C₁-C₄ alkyl, C₁-C₄ haloalkyl, C₁-C₄ alkoxy, C₁-C₄ haloalkoxy or nitro.

This invention also relates to compositions and methods for the prevention, control or amelioration of diseases caused by phytopathogenic fungi.

### DETAILED DESCRIPTION OF THE INVENTION

Phytopathogenic fungi are the causal agents for many diseases that infect and destroy agronomic crops, both growing and harvested. In the United States alone, agronomic crops must compete with about 18,000 species of fungi. Especially devasting are diseases such as apple scab, grape downy mildew, tomato early blight, grape or pepper botrytis and the like. Accordingly, there is ongoing research to create new and more effective fungicides for preventing or controlling the vast array of fungal infestations of crops.

Advantageously, the present invention provides a method for the prevention, control or amelioration of a disease caused by a phytopathogenic fungus by contacting said fungus with a fungicidally effective amount of a diaryl(pyridinio or isoquinolinio)boron compound.

The present invention also provides a method for the protection of a plant, plant seed or tuber from fungal infestation and disease by applying to the plant, plant seed or tuber, or to the medium or water in which it is growing, a fungicidally effective amount of a diaryl(pyridinio or isoquinolinio)boron compound.

The term "medium" used herein is defined as any environment, including but not limited to artificial nutrients or soil, in which a plant can be kept, live or thrive.

The fungicidal, insecticidal, and acaricidal diaryl(pyridinio and isoquinolinio)boron compounds of the present invention have the following structural formula I: 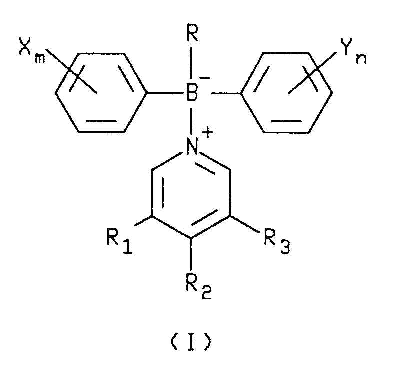 wherein
- X and Y: are each independently halogen, C₁-C₈ alkyl, C₁-C₈ haloalkyl, C₁-C₈ alkoxy or C₁-C₈ haloalkoxy;
- m and n: are each independently an integer of 0, 1, 2 or 3;
- R: is C₁-C₈ alkyl, C₁-C₈ alkoxy, halogen or hydroxy;
- R₁, R₂ and R₃: are each independently hydrogen, C₁-C₈ alkyl, C₁-C₈ haloalkyl, C₁-C₈ alkoxy, C₁-C₈ haloalkoxy, halogen, cyano, nitro, C(O)R₄, NR₅R₆ or phenyl optionally substituted with one to three halogen, C₁-C₄ alkyl, C₁-C₄ haloalkyl, C₁-C₄ alkoxy, C₁-C₄ haloalkoxy or NR₅R₆ groups, and when taken together, R₂ and R₃ may form a ring in which R₂R₃ is represented by the structure: -(CH₂)ₚ- or 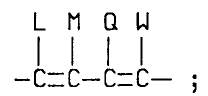 R₄, R₅ and R₆ are each independently hydrogen or C₁-C₄ alkyl;
- p: is an integer of 3 or 4; and
- L, M, Q and W: are each independently hydrogen, halogen, C₁-C₄ alkyl, C₁-C₄ haloalkyl, C₁-C₄ alkoxy, C₁-C₄ haloalkoxy or nitro; provided that when each of R₁, R₂ and R₃ is hydrogen or t-butyl then R must be other than halogen; and further provided that when X, Y, R₁, R₂ and R₃ are each hydrogen, then R must be hydroxy; with the exception of a compound, wherein n = m = 3, X = Y = Cl, R = OH, R₁ = R₂ = R₃ = H.

The term halogen used herein included fluorine, chlorine, bromine and iodine.

Compounds of formula I which are preferred in the methods and compositions of the present invention are those wherein
- X and Y: are each independently halogen, C₁-C₈ alkyl or C₁-C₈ haloalkyl;
- m and n: are each independently an integer of 0, 1 or 2;
- R: is C₁-C₈ alkyl, C₁-C₈ alkoxy, halogen or hydroxy;
- R₁, R₂ and R₃: are each independently hydrogen, C₁-C₈ alkyl, C₁-C₈ haloalkyl, halogen, cyano, C(O)R₄ or phenyl, and when taken together, R₂ and R₃ may form a ring in which R₂R₃ is represented by the structure: -(CH₂)₄- or 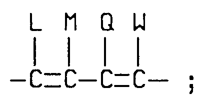
- R₄: is C₁-C₄ alkyl; and
- L, M, Q and W: are each independently hydrogen, halogen, C₁-C₄ alkyl, C₁-C₄ haloalkyl or nitro.

More preferred formula I compounds of the present invention are those wherein
- X and Y: are each independently halogen or C₁-C₈ alkyl;
- m and n: are each independently an integer of 0, 1 or 2;
- R: is C₁-C₈ alkyl;
- R₁, R₂ and R₃: are each independently hydrogen, C₁-C₈ alkyl, halogen, cyano, C(O)R₄ or phenyl, and when taken together, R₂ and R₃ may form a ring in which R₂R₃ is represented by the structure: -(CH₂)₄- or -CL=CH-CH=CH-;
- R₄: is C₁-C₄ alkyl; and
- L: is hydrogen or nitro.

Diaryl(pyridinio and isoquinolinio)boron compounds of the present invention which are particularly effective fungicidal agents include
(5,6,7,8-tetrahydroisoquinolinio)methyldiphenylboron; (isoquinolinio)methyldiphenylboron; bis(p-fluorophenyl)(isoquinolinio)methylboron; (4-isopropylpyridinio)methyldiphenylboron; methyl(3-methylpyridinio)diphenylboron; (3-butylpyridinio)methyldiphenylboron; and (3-ethyl-4-methylpyridinio)methyldiphenylboron, among others.

The diaryl(pyridinio and isoquinolinio)boron compounds of the present invention are useful in the prevention, control or amelioration of diseases such as apple scab, grape downy mildew, tomato early blight and grape or pepper botrytis. Such diseases are caused by the phytopathogenic fungi Venturia inaequalis, Plasmopara viticola, Alternaria solani and Botrytis cinerea, respectively.

Diaryl(pyridinio and isoquinolinio)boron compounds of formula I wherein R is C₁-C₈ alkyl may be prepared by reacting a diarylborinic acid ethanolamine ester of formula II with an alkyl magnesium halide of formula III to form an intermediate of formula IV and reacting said formula IV intermediate with a pyridine or isoquinoline of formula V as shown in Flow Diagram I. 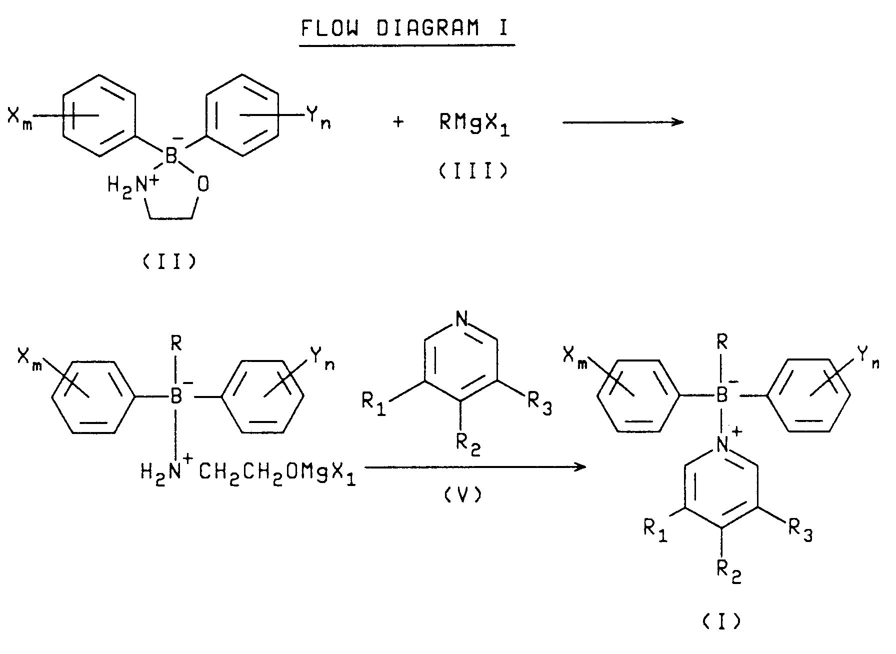
- wherein: X, Y, m, n, R₁, R₂ and R₃ are as described hereinabove for formula I;
R is C₁-C₈ alkyl; and
X₁ is chlorine, bromine or iodine.

Diaryl(pyridinio and isoquinolinio)boron compounds of formula I wherein R is C₁-C₈ alkoxy, halogen or hydroxy may be prepared by reacting a diarylboron compound of formula VI with a pyridine or isoquinoline of formula V as shown in Flow Diagram II. 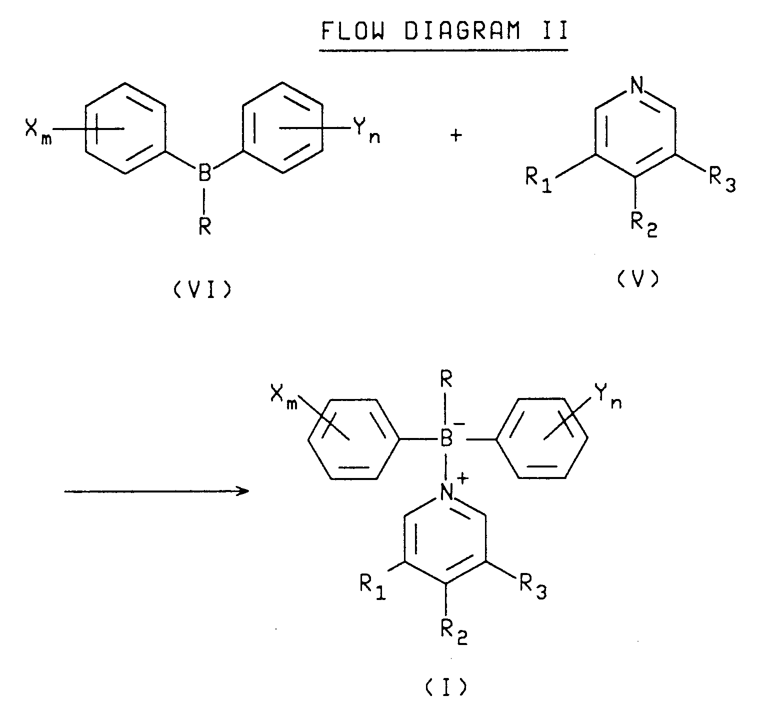
- wherein: X, Y, m, n, R₁, R₂ and R₃ are as described hereinabove for formula I; and
R is C₁-C₈ alkoxy, halogen or hydroxy.

The formula I compounds of the present invention are especially useful for controlling or preventing the growth of phytopathogenic fungi such as Venturia inaequalis, Plasmopara viticola, Alternaria solani and Botrytis cinerea. Therefore, harmful diseases such as apple scab, grape downy mildew, tomato early blight and grape and pepper botrytis may be prevented or controlled.

Fungi controlled or ameliorated by the formula I compounds of this invention include Ascomycetes such as Venturia inaequalis, Erysiphe graminis f.sp. tritici, Leptosphaeria nodorum, Alternaria solani, Cercospora beticola, Botrytis cinerea, Pseudocercosporella herpotrichoides, Fusarium oxysporum and Pyricularia grisea f.sp. oryzae; Basidiomycete such as Thanatephorus cucumeris and Puccinia recondita; and Oomycete such as Plasmopara viticola and Pythium ultimum. Advantageously, it has been found that the compounds of the present invention are especially effective against Venturia inaequalis, Plasmopara viticola, Alternaria solani and Botrytis cinerea.

The compounds of the present invention are also useful for the protection of growing or harvested plants from the damage caused by photopathogenic fungal disease when applied to said plants at a fungicidally effective rate. The effective rate will vary depending upon factors such as the virulence of the target fungus, the environment of the treatment and other ambient conditions. In practice, generally about 20 ppm to 1,000 ppm, preferably about 50 ppm to 500 ppm of a formula I compound may be dispersed in a liquid or solid carrier and applied to the plant, seed or tuber, or to the medium or water in which the plant, seed or tuber is growing.

The compounds of the invention may be formulated as concentrated solutions, emulsifiable concentrates, flowable concentrates, microemulsions and the like. Said compounds may also be formulated as dry compacted granules, granular compositions, dusts, dust concentrates, suspension concentrates, wettable powders, and the like. Those formulations which lend themselves to seed, tuber, medium, water and/or foliage applications to provide the requisite plant protection are suitable. Such formulations include the compounds of the invention admixed with an inert solid or liquid carrier.

It is contemplated that the compounds of the invention may be used in conjunction with, or in combination with, a pesticidally effective amount of one or more other pesticides, including but not limited to, anilazine, benalaxyl, benomyl, bitertanol, bordeaux mixture, carbendazim, carboxin, captafol, captan, chlorothalonil, cyproconazole, dichloran, diethofencarb, diniconazole, dithianon, dodine, edifenphos, fenarimol, fenbuconazole, fenfuram, fenpropidin, fenpropimorph, fentin hydroxide, ferbam, flusilazole, flusulfamide, flutriafol, folpet, fosetyl, fuberidazole, guazatine, hexaconazole, imazalil, iprobenfos, iprodione, mancozeb, maneb, metalaxyl, metiram, myclobutanil, nuarimol, ofurace, oxadixyl, oxycarboxin, penconazole, probenazole, prochloraz, propiconazole, pyrazophos, tebuconazole, thiabendazole, thiophanate, thiphanate-methyl, triadimefon, triadimenol, triarimol, tricyclazole, tridemorph, triflumizole, triforine, vinclozolin, and/or zineb.

Where compositions of the invention are to be employed in combination treatments with other pesticidal agents, the composition may be applied concurrently as an admixture of the components as described above, or may be applied sequentially.

The formula I diaryl (pyridinio and isoquinolinio)boron compounds are also effective for controlling insects and acarina. Those compounds are also effective for protecting growing or harvested crops from attach by insects and acarina.

Advantageously, it has been found that the formula I compounds of the present invention are especially effective against tobacco budworms, southern armyworms and two-spotted spider mites.

In practice generally about 10 ppm to about 10,000 ppm and preferably about 100 ppm to about 5,000 ppm of a formula I diaryl(pyridinio or isoquinolimio)-boron compound, dispersed in water or another liquid carrier, is effective when applied to the plants, the crops or the soil in which said crops are growing to protect said crops from attach by insects and acarina.

The formula I compounds of this invention are also effective for controlling insects and acarina, when applied to the foliage of plants and/or to the soil or water in which said plants are growing in sufficient amount to provide a rate of from about 0.1 kg/ha to 4.0 kg/ha of active ingredient.

While the formula I compounds of this invention are effective for controlling insects and acarina when employed alone, they may also be used in combination with other biological chemicals, including other insecticides and acaricides. For example, the compounds of this invention may be used effectively in conjunction or combination with arylpyrroles, pyrethroids, phosphates, carbamates, cyclodienes, endotoxin of bacillus thuringiensis (Bt), formamidines, phenol tin compounds, chlorinated hydrocarbons, benzoylphenyl ureas and the like.

In order to facilitate a further understanding of the invention, the following examples are presented primarily for the purpose of illustrating more specific details thereof. The invention should not be deemed limited thereby except as defined in the claims.

### EXAMPLE 1

### Preparation of (5,6,7,8-Tetranydroisoquinolinio)methyldiphenylboron

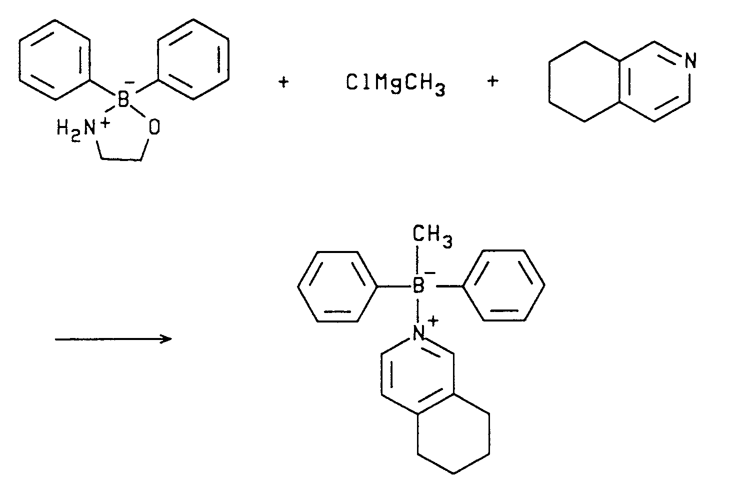

A solution of methyl magnesium chloride in methylene chloride (5.11 mL of a 3 molar solution) is added dropwise to a solution of diphenylborinic acid ethanolamine ester (1.15 g, 5.11 mmol) in tetrahydrofuran. The reaction mixture is stirred for three hours at room temperature, treated with 5,6,7,8-tetrahydroisoquinoline (2.04 g, 15.33 mmol), stirred overnight at room temperature, treated with 5% hydrochloric acid and diluted with ether. The phases are separated and the organic phase is washed sequentially with 5% hydrochloric acid and water, dried over Na₂SO₄ and concentrated in vacuo to obtain the title product as a white solid (1.41 g, mp 120°-121°C).

Using essentially the same procedure, and employing methyl magnesium chloride or methyl magnesium bromide and the appropriately substituted pyridine or isoquinoline, the following compounds are obtained:

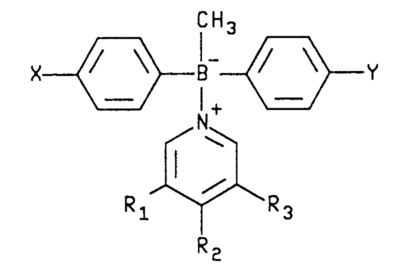

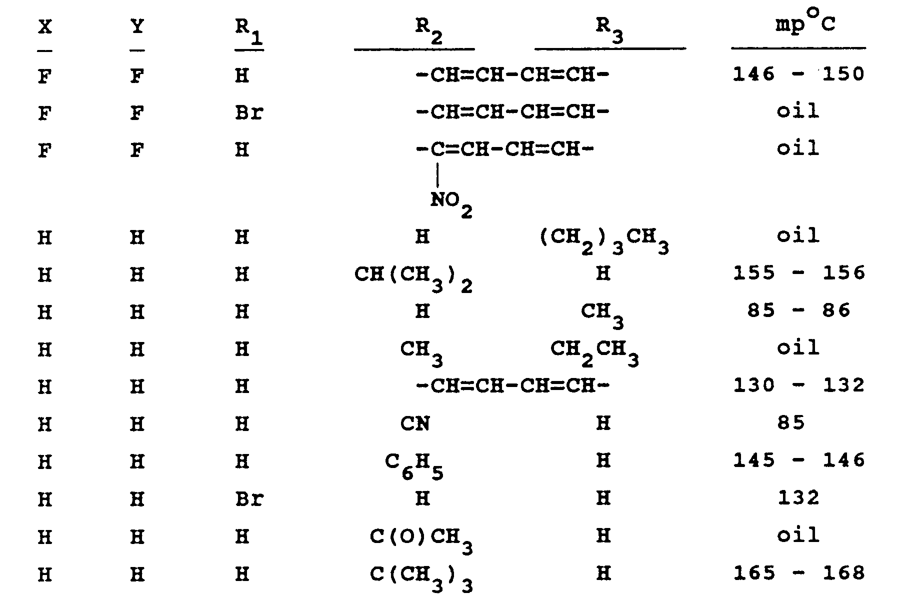

### EXAMPLE 2

### Preparation of Chloro(isoquinolinio)di-p-tolylboron

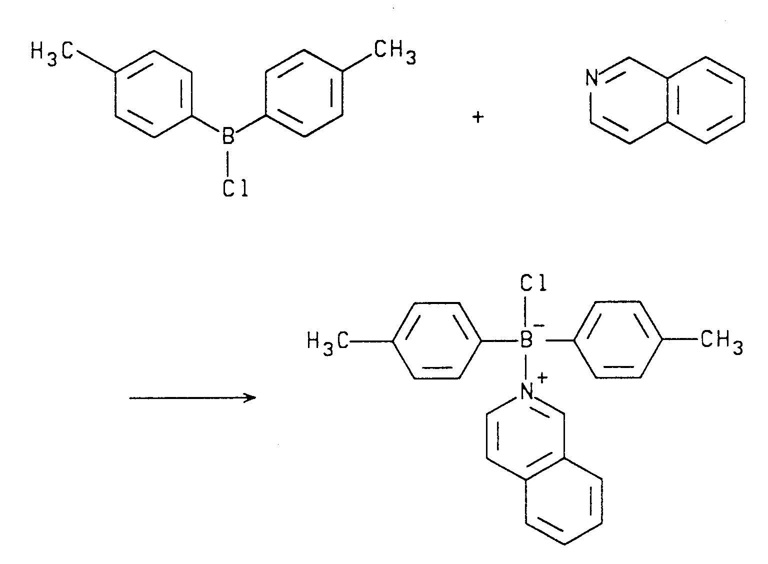

Isoquinoline (0.25 mL, 2.13 mmol) is added to a solution of chloro-di-p-tolylborane (0.5 g, 2.19 mmol) in ether. The reaction mixture is stirred overnight at room temperature and concentrated in vacuo to give the title product as a pale orange oil, 0.7 g, which is identified by ¹HNMR spectral analysis.

### EXAMPLE 3

### Preparation of Hydroxy(3-butylpyridinio)diphenylboron

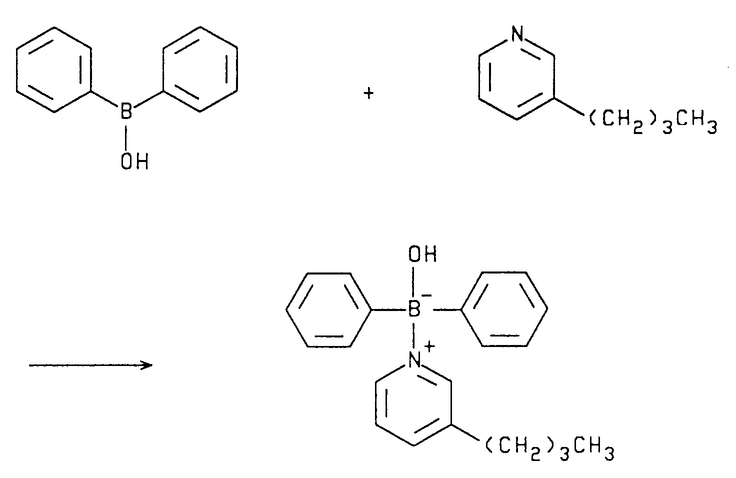

A mixture of diphenylborinic acid (0.5 g, 2.73 mmol) and 3-butylpyridine (0.37 g, 2.74 mmol) in ether is stirred at room temperature for two hours, dried over Na₂SO₄ and concentrated in vacuo to give the title product as a pale yellow oil, 0.76 g, which is identified by ¹H and ¹³CNMR spectral analyses.

Using essentially the same procedure, but substituting 4-isopropylpyridine for 3-butylpyridine, hydroxy(4-isopropylpyridinio)diphenylboron is obtained as a pale yellow oil.

### EXAMPLE 4

### Preparation of Butoxy(4-methylpyridinio)diphenylboron

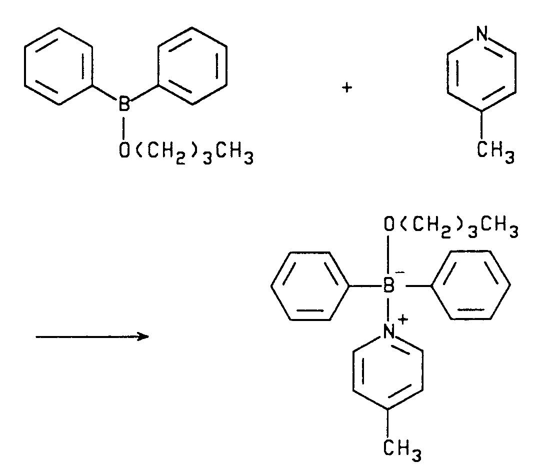

A mixture of butyl diphenylborinate (0.5 g, 2.09 mmol) and 4-picoline (0.206 mL, 2.18 mmol) in ether is stirred for thirty minutes at 0°C and concentrated in vacuo to obtain the title product as a pale yellow oil, 0.51 g, which is identified by ¹HNMR spectral analysis.

Using essentially the same procedure, and employing the appropriately substituted pyridine, the following compounds are obtained and characterized by ¹HNMR spectral analyses:

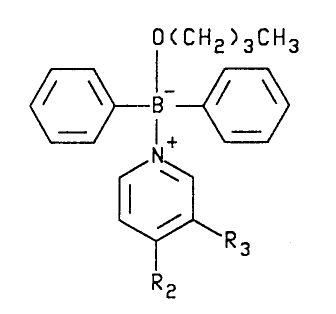

| R₂ | R₃ | |
|---|---|---|
| H | CH₃ | yellow oil |
| CH(CH₃)₂ | H | yellow oil |

### EXAMPLE 5

### Evaluation of in vivo fungicidal activity of test compounds

Test compounds are dissolved or suspended in acetone and diluted with deionized water containing about 0.05% TWEEN 20,, a polyoxyethylene sorbitan monolaurate surfactant manufactured by Atlas Chemical Industries, to give a concentration of 200 ppm.

Host plants are sprayed with the test solution, dried and inoculated with fungi. When disease symptom development is optimal, the plants are rated for disease control according to the rating scale shown below. Each test contains inoculated treated plants, inoculated untreated plants and a reference standard. When more than one test is run, the data are averaged. The data obtained are shown in Table I.

Compounds employed in this in vivo fungicidal evaluation and in the in vitro fungicidal evaluation in the following example are given a compound number and identified by name. Data in Table I are reported by compound number.

| **RATING SCALE** | |
|---|---|
| Rating | Range % Control |
| 0 | 0 |
| 1 | 1 - 14 |
| 2 | 15 - 29 |
| 3 | 30 - 44 |
| 4 | 45 - 59 |
| 5 | 60 - 74 |
| 6 | 75 - 89 |
| 7 | 90 - 95 |
| 8 | 96 - 99 |
| 9 | 100 |
| - | no evaluation |

| **PHYTOPATHOGENIC FUNGI** | | |
|---|---|---|
| Symbol | Disease | Pathogen |
| AS | Apple Scab | Venturia inaequalis |
| GDM | Grape Downy Mildew | Plasmopara viticola |
| PB | Pepper Botrytis | Botrytis cinerea |
| RB | Rice Blast | Pyricularia oryzae |
| SBC | Sugar Beet Cercospora | Cercospora beticola |
| TEB | Tomato Early Blight | Alternaria solani |
| WLR | Wheat Leaf Rust | Puccinia recondita f. sp. tritici |
| WPM | Wheat Powdery Mildew | Erysiphe graminis f. sp. tritici |

| **COMPOUNDS EVALUATED AS FUNGICIDAL AGENTS** | |
|---|---|
| Compound No. | |
| 1 | (4-Isopropylpyridinio)methyldiphenylboron |
| 2 | Methyl(3-methylpyridinio)diphenylboron |
| 3 | (3-Butylpyridinio)methyldiphenylboron |
| 4 | (5,6,7,8-Tetrahydroisoquinolinio)methyldiphenylboron |
| 5 | (3-Ethyl-4-methylpyridinio)methyldiphenylboron |
| 6 | (Isoquinolinio)methyldiphenylboron |
| 7 | Hydroxy(3-butylpyridinio)diphenylboron |
| 8 | Hydroxy(4-isopropylpyridinio)diphenylboron |
| 9 | Butoxy(4-methylpyridinio)diphenylboron |
| 10 | Butoxy(3-methylpyridinio)diphenylboron |
| 11 | Butoxy(4-isopropylpyridinio)diphenylboron |
| 12 | Chloro(isoquinolinio)di-p-tolylboron |
| 13 | Bis(p-fluorophenyl)(isoquinolinio)methylboron |
| 14 | (4-Bromoisoquinolinio)bis(p-fluorophenyl)methylboron |
| 15 | Bis(p-fluorophenyl)methyl(5-nitroisoquinolinio)boron |
| 16 | (4-Cyanopyridinio)methyldiphenylboron |
| 17 | (4-Phenylpyridinio)methyldiphenylboron |
| 18 | (3-Bromopyridinio)methyldiphenylboron |
| 19 | (4-Acetylpyridinio)methyldiphenylboron |
| 20 | (4-Tert-butyl-pyridinio)methyldiphenylboron |

**TABLE I**

| **In Vivo Fungicidal Evaluations** | | | | | | | | | |
|---|---|---|---|---|---|---|---|---|---|
| **Compound No.** | **Rate (ppm)** | **AS** | **GDM** | **PB** | **RB** | **SBC** | **TEB** | **WLR** | **WPM** |
| 1 | 200 | 9 | 9 | 7 | 7 | 0 | 7 | 8 | 8 |
| 2 | 200 | 9 | 9 | 0 | 7 | 0 | 0 | 8 | 8 |
| 3 | 200 | 9 | 9 | 6 | 0 | 0 | 8 | 8 | 8 |
| 4 | 200 | 9 | 9 | 9 | 0 | 8 | 6 | 9 | 8 |
| 5 | 200 | 0 | 9 | 0 | 0 | 0 | 8 | 8 | 9 |
| 6 | 200 | 9 | 9 | 0 | 6 | 0 | 0 | 9 | 8 |
| 7 | 200 | 6 | 0 | 0 | 6 | 0 | 0 | 5 | 5 |
| 8 | 200 | 0 | 4 | 0 | 6 | 0 | 0 | 0 | 0 |
| 9 | 200 | 0 | 0 | 6 | 0 | 0 | 0 | 0 | 0 |
| 10 | 200 | 0 | 3 | 6 | 0 | 0 | 0 | 0 | 0 |
| 11 | 200 | 8 | 0 | 4 | 0 | 0 | 0 | 0 | 0 |
| 12 | 200 | 0 | 0 | 0 | 0 | 7 | 0 | 0 | 0 |
| 13 | 200 | 7 | 9 | 9 | 7 | 8 | 8 | 7 | 8 |
| 14 | 200 | 8 | 7 | 9 | 8 | 7 | 0 | 0 | 0 |
| 15 | 200 | 9 | 0 | 9 | 3 | 7 | 4 | 0 | 0 |
| 16 | 200 | 9 | 9 | 8 | 9 | 8 | 8 | - | 0 |
| 17 | 200 | 9 | 9 | 9 | 8 | 8 | 9 | - | 8 |
| 18 | 200 | 0 | 4 | 8 | 5 | 6 | 4 | 0 | 0 |
| 19 | 200 | 9 | 9 | 9 | 8 | 9 | 8 | - | 8 |
| 20 | 200 | 9 | 9 | 9 | 8 | 9 | 8 | - | 7 |

### EXAMPLE 6

### Evaluation of in vitro fungicidal activity of test compounds

Test compounds are dissolved or suspended in acetone and dispersed into cell well plates containing a suspension of ground fungal mycelia in a nutrient broth. Assay plates are incubated for 3-4 days at 21°C. Growth inhibition is measured visually and is rated using the following scale:

| **RATING SCALE** | |
|---|---|
| Rating | Range % Control |
| 0 | 0 |
| 1 | 1 - 29 |
| 3 | 30 - 59 |
| 5 | 60 - 89 |
| 7 | 90 - 99 |
| 9 | 100 |

Untreated controls, solvent blanks and reference standards are included in each test.

Assay fungi include the plant pathogens, Pythium ultimum (Pythul); Rhizoctonia solani (Rhizso); Fusarium oxysporum f. sp. cucumerinum (Fusoxc); and Pseudocercosporella herpotrichoides (Psdche).

When more than one test is run, the data are averaged. The data obtained are shown in Table II. The compouds evaluated are reported by compound number given in Example 5.

**TABLE II**

| **In Vitro Fungicidal Evaluations** | | | | | |
|---|---|---|---|---|---|
| **Compound No.** | **Rate (ppm)** | **FUSOXC** | **PSDCHE** | **PHTHUL** | **RHIZSO** |
| 1 | 25 | 9 | 9 | 7 | 9 |
| 2 | 25 | 9 | 9 | 9 | 9 |
| 3 | 25 | 9 | 9 | 9 | 9 |
| 4 | 25 | 9 | 9 | 7 | 9 |
| 5 | 25 | 9 | 9 | 9 | 9 |
| 6 | 25 | 9 | 9 | 9 | 7 |
| 7 | 25 | 9 | 0 | 9 | 9 |
| 8 | 25 | 9 | 0 | 9 | 7 |
| 9 | 25 | 9 | 0 | 9 | 0 |
| 10 | 25 | 9 | 7 | 9 | 9 |
| 11 | 25 | 9 | 7 | 9 | 9 |
| 12 | 25 | 7 | 5 | 7 | 7 |
| 13 | 25 | 9 | 9 | 9 | 9 |
| 14 | 25 | 9 | 9 | 9 | 9 |
| 15 | 25 | 9 | 9 | 9 | 9 |
| 16 | 25 | 7 | 9 | 7 | 7 |
| 17 | 25 | 7 | 7 | 0 | 5 |
| 18 | 25 | 7 | 9 | 7 | 7 |
| 19 | 25 | 7 | 9 | 7 | 7 |
| 20 | 25 | 7 | 7 | 7 | 7 |

### EXAMPLE 7

### Insecticide and acaricide evaluations

The following tests show the efficacy of the compounds as insecticides and acaricides. The evaluations are conducted with solutions of test compounds dissolved or dispersed in 50/50 acetone/water mixtures. The test compound is technical material dissolved or dispersed in said acetone/water mixtures in sufficient amounts to provide the concentrations set forth in Table I below.
All concentrations reported herein are in terms of active ingredient. All tests are conducted in a laboratory maintained at about 27^{o}C. The rating system employed is as follows:

| **RATING SYSTEM** | |
|---|---|
| 0 = no effect | 5 = 56-65% kill |
| 1 = 10-25% kill | 6 = 66-75% kill |
| 2 = 26-35% kill | 7 = 76-85% kill |
| 3 = 36-45% kill | 8 = 86-99% kill |
| 4 = 46-55% kill | 9 = 100% kill |
| - = No evaluation | |

The test species of insects and acarina used in the present evaluations along with specific test procedures are described below.

### Spodoptera eridania 3rd instar larvae, southern army-worm

A sieva lima bean leaf expanded to 7 to 8 cm in length is dipped in the test suspension with agitation for 3 seconds and placed in a hood to dry. The leaf is then placed in a 100x10 mm petri dish containing a damp filter paper on the bottom and 10 3rd instar caterpillars. The dish is maintained for 5 days before observations are made of mortality, reduced feeding or any interference with normal moulting.

### Tetranychus urticae (OP-resistant strain), 2-spotted spider mite

Sieva lima bean plants with primary leaves expaned to 7 to 8 cm are selected and cut back to one plant per pot. A small piece is cut from a leaf taken from the main colony and placed on each leaf of the test plants. This is done about 2 hours before treatment to allow the mites to move over to the test plant and to lay eggs. The size of the cut piece is varied to obtain about 100 mites per leaf. At the time of the treatment, the piece of leaf used to transfer the mites is removed and discarded. The mite-infested plants are dipped in the test formulation for 3 seconds with agitation and set in the hood to dry. Plants are kept for 2 days before estimates of adult kill are made.

### Heliothis virenscens, 3rd instar tobacco budworm

Cotton cotyledons are dipped in the test formulation and allowed to dry in a hood. When dry, each is cut into quarters and ten sections placed individually in 30 mL plastic medicine cups containing a 5 to 7 mm long piece of damp dental wick. One 3rd instar caterpillar is added to each cup and a cardboard lid placed on the cup. Treatments are maintained for 3 days before mortality counts and estimates of reduction in feeding damage are made.

### Diabrotica undecimpunctata howardi, 3rd instar southern corn rootworm

One cc of fine talc is placed in a 30 mL wide-mouth screw-top glass jar. One mL of the appropriate acetone test solution is pipetted onto the talc so as to provide 1.25 mg of active ingredient per jar. The jars are set under a gentle air flow until the acetone is evaporated. The dried talc is loosened, 1 cc of millet seed is added to serve as food for the insects and 25 mL of moist soil is added to each jar. The jars are capped and the contents thoroughly mixed on a Vortex Mixer. Following this, ten 3rd instar rootworms are added to each jar and the jars are loosely capped to allow air exchange for the larvae. The treatments are held for 6 days before mortality counts are made. Missing larvae are presumed dead, since they decompose rapidly and can not be found. The concentration used in this test corresponds to approximately 50 kg/ha.
The data obtained for the above described evaluations are reported in Table I.

**TABLE I**

| **Insecticide And Acaricide Evaluations** | | | | | |
|---|---|---|---|---|---|
| **Compound** | **Southern Armyworm (ppm)** | | **OP. Res. Mites (ppm) 300** | **Tobacco Budworm Larvae (ppm) 300** | **Southern Corn Rootworm (kg/ha) 50** |
| | **300** | **1000** | | | |
| (4-Isopropylpyridinio)methyldiphenylboron | 8 | - | 8 | 8 | 0 |
| (Isoquinolinio)methyldiphenylboron | 9 | - | 8 | 8 | 9 |
| (3-Ethyl-4-methylpyridinio)methyldiphenylboron | - | 9 | 8 | - | 9 |
| (4-Bromoisoquinolinio)bis(p-fluorophenyl)methylboron | - | 9 | 9 | - | 5 |
| (3-Bromopyridinio)methyldiphenylboron | - | 9 | 7 | - | 0 |
| Methyl(3-methylpyridinio)diphenylboron | - | 9 | 9 | - | 9 |

## Claims

1. A method for the prevention, control or amelioration of a disease caused by a phytopathogenic fungus which comprises contacting said fungus with a fungicidally effective amount of a compound having the structural formula 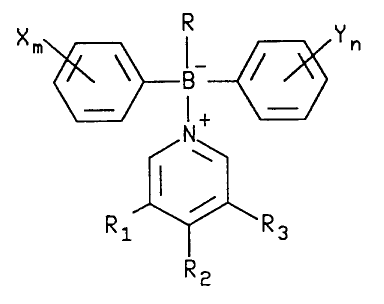 wherein
X and Y are each independently halogen, C₁-C₈ alkyl, C₁-C₈ haloalkyl, C₁-C₈ alkoxy or C₁-C₈ haloalkoxy;
m and n are each independently an integer of 0, 1, 2 or 3;
R is C₁-C₈ alkyl, C₁-C₈ alkoxy, halogen or hydroxy;
R₁, R₂ and R₃ are each independently hydrogen, C₁-C₈ alkyl, C₁-C₈ haloalkyl, C₁-C₈ alkoxy, C₁-C₈ haloalkoxy, halogen, cyano, nitro, C(O)R₄, NR₅R₆ or phenyl optionally substituted with one to three halogen, C₁-C₄ alkyl, C₁-C₄ haloalkyl, C₁-C₄ alkoxy, C₁-C₄ haloalkoxy or NR₅R₆ groups, and when taken together, R₂ and R₃ may form a ring in which R₂R₃ is represented by the structure: -(CH₂)ₚ- or 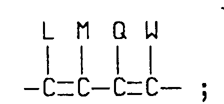
R₄, R₅ and R₆ are each independently hydrogen or C₁-C₄ alkyl;
p is an integer of 3 or 4; and
L, M, Q and W are each independently hydrogen, halogen, C₁-C₄ alkyl, C₁-C₄ haloalkyl, C₁-C₄ alkoxy, C₁-C₄ haloalkoxy or nitro.

2. The method according to claim 1 wherein
X and Y are each independently halogen, C₁-C₈ alkyl or C₁-C₈ haloalkyl;
m and n are each independently an integer of 0, 1 or 2;
R₁, R₂ and R₃ are each independently hydrogen, C₁-C₈ alkyl, C₁-C₈ haloalkyl, halogen, cyano, C(O)R₄ or phenyl, and when taken together, R₂ and R₃ may form a ring in which R₂R₃ is represented by the structure: -(CH₂)₄- or 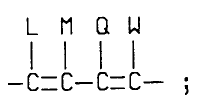
R₄ is C₁-C₄ alkyl; and
L, M, Q and W are each independently hydrogen, halogen, C₁-C₄ alkyl, C₁-C₄ haloalkyl or nitro.

3. The method according to claim 2 wherein
X and Y are each independently halogen or C₁-C₈ alkyl;
R is C₁-C₈ alkyl;
R₁, R₂ and R₃ are each independently hydrogen, C₁-C₈ alkyl, halogen, cyano, C(O)R₄ or phenyl, and when taken together, R₂ and R₃ may form a ring in which R₂R₃ is represented by the structure -(CH₂)₄- or -CL=CH-CH=CH-; and
L is hydrogen or nitro.

4. A method for the protection of a plant, plant seed or tuber from fungal infestation and disease or from attack by insects or acarina which comprises applying to the plant, plant seed or tuber, or to the medium or water in which it is growing, a fungicidally, insecticidally or acaricidally effective amount of a compound having the structural formula 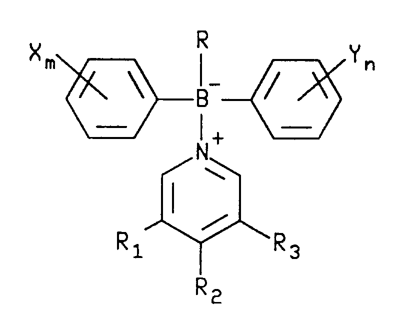 wherein
X and Y are each independently halogen, C₁-C₈ alkyl, C₁-C₈ haloalkyl, C₁-C₈ alkoxy or C₁-C₈ haloalkoxy;
m and n are each independently an integer of 0, 1, 2 or 3;
R is C₁-C₈ alkyl, C₁-C₈ alkoxy, halogen or hydroxy;
R₁, R₂ and R₃ are each independently hydrogen, C₁-C₈ alkyl, C₁-C₈ haloalkyl, C₁-C₈ alkoxy, C₁-C₈ haloalkoxy, halogen, cyano, nitro, C(O)R₄, NR₅R₆ or phenyl optionally substituted with one to three halogen, C₁-C₄ alkyl, C₁-C₄ haloalkyl, C₁-C₄ alkoxy, C₁-C₄ haloalkoxy or NR₅R₆ groups, and when taken together, R₂ and R₃ may form a ring in which R₂R₃ is represented by the structure: -(CH₂)ₚ- or 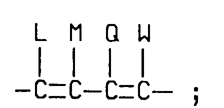
R₄, R₅ and R₆ are each independently hydrogen or C₁-C₄ alkyl;
p is an integer of 3 or 4; and
L, M, Q and W are each independently hydrogen, halogen, C₁-C₄ alkyl, C₁-C₄ haloalkyl, C₁-C₄ alkoxy, C₁-C₄ haloalkoxy or nitro.

5. The method according to claim 4 wherein
X and Y are each independently halogen, C₁-C₈ alkyl or C₁-C₈ haloalkyl;
m and n are each independently an integer of 0, 1 or 2;
R₁, R₂ and R₃ are each independently hydrogen, C₁-C₈ alkyl, C₁-C₈ haloalkyl, halogen, cyano, C(O)R₄ or phenyl, and when taken together, R₂ and R₃ may form a ring in which R₂R₃ is represented by the structure: -(CH₂)₄- or 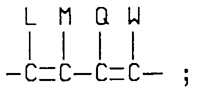
R₄ is C₁-C₄ alkyl; and
L, M, Q and W are each independently hydrogen, halogen, C₁-C₄ alkyl, C₁-C₄ haloalkyl or nitro.

6. A composition for controlling phytopathogenic fungi, insects, or acarids which comprises an inert liquid or solid carrier and a fungicidally, insecticidally, or acaricidally effective amount of a compound having the structural formula 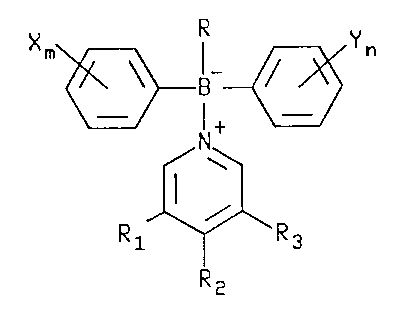 wherein
X and Y are each independently halogen, C₁-C₈ alkyl, C₁-C₈ haloalkyl, C₁-C₈ alkoxy or C₁-C₈ haloalkoxy;
m and n are each independently an integer of 0, 1, 2 or 3;
R is C₁-C₈ alkyl, C₁-C₈ alkoxy, halogen or hydroxy;
R₁, R₂ and R₃ are each independently hydrogen, C₁-C₈ alkyl, C₁-C₈ haloalkyl, C₁-C₈ alkoxy, C₁-C₈ haloalkoxy, halogen, cyano, nitro, C(O)R₄, NR₅R₆ or phenyl optionally substituted with one to three halogen, C₁-C₄ alkyl, C₁-C₄ haloalkyl, C₁-C₄ alkoxy, C₁-C₄ haloalkoxy or NR₅R₆ groups, and when taken together, R₂ and R₃ may form a ring in which R₂R₃ is represented by the structure: -(CH₂)ₚ- or 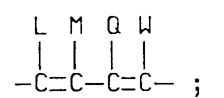
R₄, R₅ and R₆ are each independently hydrogen or C₁-C₄ alkyl;
p is an integer of 3 or 4; and
L, M, Q and W are each independently hydrogen, halogen, C₁-C₄ alkyl, C₁-C₄ haloalkyl, C₁-C₄ alkoxy, C₁-C₄ haloalkoxy or nitro;
provided that when each of R₁, R₂ and R₃ is hydrogen or t-butyl then R must be other than halogen; and further provided that when X, Y, R₁, R₂ and R₃ are hydrogen then R is hydroxy; with the exception of a compound, wherein n = m = 3, X = Y = Cl, R = OH, R₁ = R₂ = R₃ = H.

7. A method for controlling insects and acarina which comprises contacting said insects and acarina, their breeding ground, food supply or habitat with an insecticidally or acaricidally effective amount of a compound having the structural formula 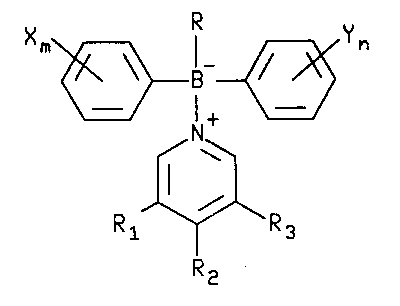 wherein
X and Y are each independently halogen, C₁-C₈ alkyl, C₁-C₈ haloalkyl, C₁-C₈ alkoxy or C₁-C₈ haloalkoxy;
m and n are each independently an integer of 0, 1, 2 or 3;
R is C₁-C₈ alkyl, C₁-C₈ alkoxy, halogen or hydroxy;
R₁, R₂ and R₃ are each independently hydrogen, C₁-C₈ alkyl, C₁-C₈ haloalkyl, C₁-C₈ alkoxy, C₁-C₈ haloalkoxy, halogen, cyano, nitro, C(O)R₄, NR₅R₆ or phenyl optionally substituted with one to three halogen, C₁-C₄ alkyl, C₁-C₄ haloalkyl, C₁-C₄ alkoxy, C₁-C₄ haloalkoxy or NR₅R₆ groups, and when taken together, R₂ and R₃ may form a ring in which R₂R₃ is represented by the structure: -(CH₂)ₚ- or 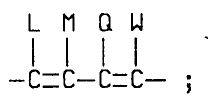
R₄, R₅ and R₆ are each independently hydrogen or C₁-C₄ alkyl;
p is an integer of 3 or 4; and
L, M, Q and W are each independently hydrogen, halogen, C₁-C₄ alkyl, C₁-C₄ haloalkyl, C₁-C₄ alkoxy, C₁-C₄ haloalkoxy or nitro.

8. A compound having the structural formula 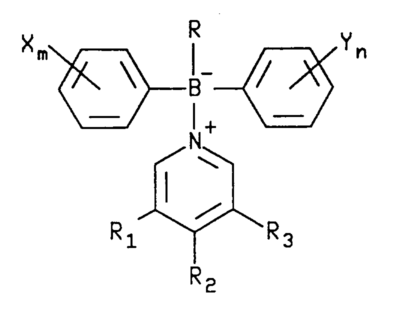 wherein
X and Y are each independently halogen, C₁-C₈ alkyl,C₁-C₈ haloalkyl, C₁-C₈ alkoxy or C₁-C₈ haloalkoxy;
m and n are each independently an integer of 0, 1, 2 or 3;
A is C₁-C₈ alkyl, C₁-C₈ alkoxy, halogen or hydroxy;
R₁, R₂ and R₃ are each independently hydrogen, C₁-C₈ alkyl, C₁-C₈ haloalkyl, C₁-C₈ alkoxy, C₁-C₈ haloalkoxy, halogen, cyano, nitro, C(O)R₄, NR₅R₆ or phenyl optionally substituted with one to three halogen, C₁-C₄ alkyl, C₁-C₄ haloalkyl, C₁-C₄ alkoxy, C₁-C₄ haloalkoxy or NR₅R₆ groups, and when taken together, R₂ and R₃ may form a ring in which R₂R₃ is represented by the structure: -(CH₂)ₚ- or 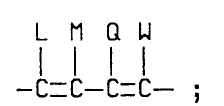
R₄, R₅ and R₆ are each independently hydrogen or C₁-C₄ alkyl;
p is an integer of 3 or 4; and
L, M, Q and W are each independently hydrogen, halogen, C₁-C₄ alkyl, C₁-C₄ haloalkyl, C₁-C₄ alkoxy, C₁-C₄ haloalkoxy or nitro;
provided that when each of R₁, R₂ and R₃ is hydrogen or t-butyl then R must be other than halogen; and further provided that when X, Y, R₁, R₂ and R₃ are hydrogen then R is hydroxy; with the exception of a compound, wherein n = m = 3, X = Y = Cl, R = OH, R₁ = R₂ = R₃ = H.

9. The compound according to claim 8 wherein
X and Y are each independently halogen, C₁-C₈ alkyl or C₁-C₈ haloalkyl;
m and n are each independently an integer of 0, 1 or 2;
R₁, R₂ and R₃ are each independently hydrogen, C₁-C₈ alkyl, C₁-C₈ haloalkyl, halogen, cyano, C(O)R₄ or phenyl, and when taken together, R₂ and R₃ may form a ring in which R₂R₃ is represented by the structure: -(CH₂)₄- or 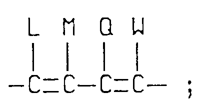
R₄ is C₁-C₄ alkyl; and
L, M, Q and W are each independently hydrogen, halogen, C₁-C₄ alkyl, C₁-C₄ haloalkyl or nitro.

## Patentansprüche

1. Verfahren zur Vorbeugung, Bekämpfung oder Besserung einer durch einen phytopathogenen Pilz verursachten Krankheit, das umfaßt: in Kontaktbringen des Pilzes mit einer fungizid wirksamen Menge einer Verbindung mit der Strukturformel 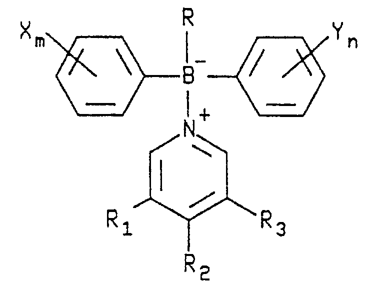 in der
jedes X und Y unabhängig Halogen, C₁-C₈-Alkyl, C₁-C₈-Haloalkyl, C₁-C₈-Alkoxy oder C₁-C₈-Haloalkoxy ist;
jedes m und n unabhängig eine ganze Zahl 0, 1, 2 oder 3 ist; R C₁-C₈-Alkyl, C₁-C₈-Alkoxy, Halogen oder Hydroxy ist;
jedes R₁, R₂ und R₃ unabhängig Wasserstoff, C₁-C₈-Alkyl, C₁-C₈-Haloalkyl, C₁-C₈-Alkoxy oder C₁-C₈-Haloalkoxy, Halogen, Cyano, Nitro, C(O)R₄, NR₅R₆ oder Phenyl ist, gegebenenfalls mit ein bis drei Halogen-, C₁-C₄-Alkyl-, C₁-C₄-Haloalkyl-C₁-C₄-Alkoxy-, C₁-C₄-Haloalkoxy- oder NR₅R₆-Gruppen substituiert, und R₂ und R₃, wenn sie zusammengenommen werden, einen Ring bilden können, in dem R₂R₃ durch die Struktur dargestellt wird: -(CH₂)ₚ- oder 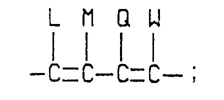
jedes R₄, R₅ und R₆ unabhängig Wasserstoff oder C₁-C₄-Alkyl ist;
p eine ganze Zahl 3 oder 4 ist und
jedes L, M, Q und W unabhängig Wasserstoff, Halogen, C₁-C₄-Alkyl, C₁-C₄-Haloalkyl, C₁-C₄-Alkoxy, C₁-C₄-Haloalkoxy oder Nitro ist.

2. Verfahren nach Anspruch 1, in dem
jedes X und Y unabhängig Halogen, C₁-C₈-Alkyl oder C₁-C₈-Haloalkyl ist;
jedes m und n unabhängig eine ganze Zahl 0, 1 oder 2 ist;
jedes R₁, R₂ und R₃ unabhängig Wasserstoff, C₁-C₈-Alkyl, C₁-C₈-Haloalkyl, Halogen, Cyano, C(O)R₄ oder Phenyl ist, und R₂ und R₃, wenn sie zusammengenommen werden, einen Ring bilden können, in dem R₂R₃ durch die Struktur dargestellt wird: -(CH₂)₄- oder 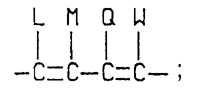
R₄ C₁-C₄-Alkyl ist und
jedes L, M, Q und W unabhängig Wasserstoff, Halogen, C₁-C₄-Alkyl, C₁-C₄-Haloalkyl oder Nitro ist.

3. Verfahren nach Anspruch 2, in dem
jedes X und Y unabhängig Halogen oder C₁-C₈-Alkyl ist;
R C₁-C₈-Alkyl ist;
jedes R₁, R₂ und R₃ unabhängig Wasserstoff, C₁-C₈-Alkyl, Halogen, Cyano, C(O)R₄ oder Phenyl ist, und R₂ und R₃, wenn sie zusammengenommen werden, einen Ring bilden können, in dem R₂R₃ durch die Struktur dargestellt wird: -(CH₂)₄- oder -CL=CH-CH=CH- und
L Wasserstoff oder Nitro ist.

4. Verfahren zum Schutz einer Pflanze, Pflanzensamen oder -knolle vor Pilzbefall und Erkrankung oder vor Insekten- oder Akarinabefall, das umfaßt: Behandeln der Pflanze, des Pflanzensamens oder der Knolle oder des Mediums oder des Wassers, in dem sie wächst, mit einer fungizid, insektizid oder akarizid wirksamen Menge einer Verbindung mit der Strukturformel 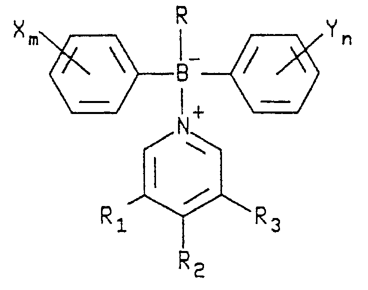 in der
jedes X und Y unabhängig Halogen, C₁-C₈-Alkyl, C₁-C₈-Haloalkyl, C₁-C₈-Alkoxy oder C₁-C₈-Haloalkoxy ist;
jedes m und n unabhängig eine ganze Zahl 0, 1, 2 oder 3 ist;
R C₁-C₈-Alkyl, C₁-C₈-Alkoxy, Halogen oder Hydroxy ist;
jedes R₁, R₂ und R₃ unabhängig Wasserstoff, C₁-C₈-Alkyl-, C₁-C₈-Haloalkyl-, C₁-C₈-Alkoxy-, C₁-C₈-Haloalkoxy, Halogen, Cyano, Nitro, C(O)R₄, NR₅R₆ oder Phenyl ist, gegebenenfalls mit ein bis drei Halogen-, C₁-C₄-Alkyl-, C₁-C₄-Haloalkyl-, C₁-C₄-Alkoxy-, C₁-C₄-Haloalkoxy- oder NR₅R₆-Gruppen substituiert, und R₂ und R₃, wenn sie zusammengenommen werden, einen Ring bilden können, in dem R₂R₃ durch die Struktur dargestellt wird: -(CH₂)ₚ- oder 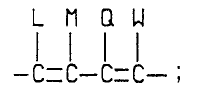
jedes R₄, R₅ und R₆ unabhängig Wasserstoff oder C₁-C₄-Alkyl ist;
p eine ganze Zahl 3 oder 4 ist und
jedes L, M, Q und W unabhängig Wasserstoff, Halogen, C₁-C₄-Alkyl, C₁-C₄-Haloalkyl, C₁-C₄-Alkoxy, C₁-C₄-Haloalkoxy oder Nitro ist.

5. Verfahren nach Anspruch 4, in dem
jedes X und Y unabhängig Halogen, C₁-C₈-Alkyl oder C₁-C₈-Haloalkyl ist;
jedes m und n unabhängig eine ganze Zahl 0, 1 oder 2 ist;
jedes R₁, R₂ und R₃ unabhängig Wasserstoff, C₁-C₈-Alkyl, C₁-C₈-Haloalkyl, Halogen, Cyano, C(O)R₄ oder Phenyl ist, und R₂ und R₃, wenn sie zusammengenommen werden, einen Ring bilden können, in dem R₂R₃ durch die Struktur dargestellt wird: -(CH₂)₄- oder 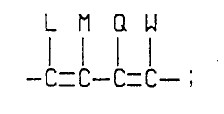
R₄ C₁-C₄-Alkyl ist und
jedes L, M, Q und W unabhängig Wasserstoff, Halogen, C₁-C₄-Alkyl, C₁-C₄-Haloalkyl oder Nitro ist.

6. Zusammensetzung zur Bekämpfung phytopathogener Pilze, Insekten oder Akarina, die eine inerte Flüssigkeit oder einen festen Träger und eine fungizid, insektizid oder akarizid wirksame Menge einer Verbindung mit der Strukturformel 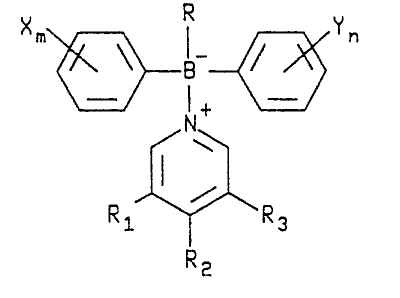 umfaßt, in der
jedes X und Y unabhängig Halogen, C₁-C₈-Alkyl, C₁-C₈-Haloalkyl, C₁-C₈-Alkoxy oder C₁-C₈-Haloalkoxy ist;
jedes m und n unabhängig eine ganze Zahl 0, 1, 2 oder 3 ist;
R C₁-C₈-Alkyl, C₁-C₈-Alkoxy, Halogen oder Hydroxy ist;
jedes R₁, R₂ und R₃ unabhängig Wasserstoff, C₁-C₈-Alkyl, C₁-C₈-Haloalkyl, C₁-C₈-Alkoxy oder C₁-C₈-Haloalkoxy, Halogen, Cyano, Nitro, C(O)R₄, NR₅R₆ oder Phenyl ist, gegebenenfalls mit ein bis drei Halogen-, C₁-C₄-Alkyl-, C₁-C₄-Haloalkyl-C₁-C₄-Alkoxy-, C₁-C₄-Haloalkoxy- oder NR₅R₆-Gruppen substituiert, und R₂ und R₃, wenn sie zusammengenommen werden, einen Ring bilden können, in dem R₂R₃ durch die Struktur dargestellt wird: -(CH₂)ₚ- oder 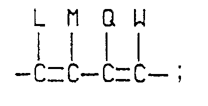
jedes R₄, R₅ und R₆ unabhängig Wasserstoff oder C₁-C₄-Alkyl ist;
p eine ganze Zahl 3 oder 4 ist und
jedes L, M, Q und W unabhängig Wasserstoff, Halogen, C₁-C₄-Alkyl, C₁-C₄-Haloalkyl, C₁-C₄-Alkoxy, C₁-C₄-Haloalkoxy oder Nitro ist;
mit der Maßgabe, daß, wenn jedes der R₁, R₂ und R₃ Wasserstoff oder t-Butyl ist, R kein Halogen sein kann; und ferner mit der Maßgabe, daß, wenn X, Y, R₁, R₂ und R₃ Wasserstoff sind, R Hydroxy ist; mit Ausnahme einer Verbindung, in der n = m = 3, X = Y = Cl, R = OH und R₁ = R₂ = R₃ = H ist.

7. Verfahren zur Bekämpfung von Insekten und Akarina, das umfaßt: in Kontaktbringen der Insekten und Akarina, ihrer Brutstätte, Nahrungsversorgung oder Behausung mit einer insektizid oder akarizid wirksamen Menge einer Verbindung mit der Strukturformel 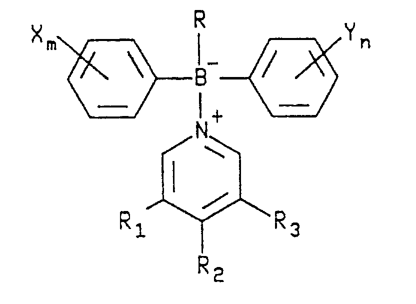 in der
jedes X und Y unabhängig Halogen, C₁-C₈-Alkyl, C₁-C₈-Haloalkyl, C₁-C₈-Alkoxy oder C₁-C₈-Haloalkoxy ist;
jedes m und n unabhängig eine ganze Zahl 0, 1, 2 oder 3 ist;
R C₁-C₈-Alkyl, C₁-C₈-Alkoxy, Halogen oder Hydroxy ist;
jedes R₁, R₂ und R₃ unabhängig Wasserstoff, C₁-C₈-Alkyl, C₁-C₈-Haloalkyl, C₁-C₈-Alkoxy oder C₁-C₈-Haloalkoxy, Halogen, Cyano, Nitro, C(O)R₄, NR₅R₆ oder Phenyl ist, gegebenenfalls mit ein bis drei Halogen-, C₁-C₄-Alkyl-, C₁-C₄-Haloalkyl-C₁-C₄-Alkoxy-, C₁-C₄-Haloalkoxy- oder NR₅R₆-Gruppen substituiert, und R₂ und R₃, wenn sie zusammengenommen werden, einen Ring bilden können, in dem R₂R₃ durch die Struktur dargestellt wird: -(CH₂)ₚ- oder 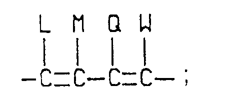
jedes R₄, R₅ und R₆ unabhängig Wasserstoff oder C₁-C₄-Alkyl ist;
p eine ganze Zahl 3 oder 4 ist und
jedes L, M, Q und W unabhängig Wasserstoff, Halogen, C₁-C₄-Alkyl, C₁-C₄-Haloalkyl, C₁-C₄-Alkoxy, C₁-C₄-Haloalkoxy oder Nitro ist.

8. Verbindung mit der Strukturformel 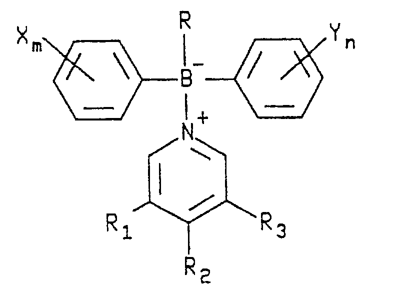 in der
jedes X und Y unabhängig Halogen, C₁-C₈-Alkyl, C₁-C₈-Haloalkyl, C₁-C₈-Alkoxy oder C₁-C₈-Haloalkoxy ist;
jedes m und n unabhängig eine ganze Zahl 0, 1, 2 oder 3 ist;
R C₁-C₈-Alkyl, C₁-C₈-Alkoxy, Halogen oder Hydroxy ist;
jedes R₁, R₂ und R₃ unabhängig Wasserstoff, C₁-C₈-Alkyl, C₁-C₈-Haloalkyl, C₁-C₈-Alkoxy, C₁-C₈-Haloalkoxy, Halogen, Cyano, Nitro, C(O)R₄, NR₅R₆ oder Phenyl ist, gegebenenfalls mit ein bis drei Halogen-, C₁-C₄-Alkyl-, C₁-C₄-Haloalkyl-, C₁-C₄-Alkoxy-, C₁-C₄-Haloalkoxy- oder NR₅R₆-Gruppen substituiert, und R₂ und R₃, wenn sie zusammengenommen werden, einen Ring bilden können, in dem R₂R₃ durch die Struktur dargestellt wird: -(CH₂)ₚ- oder 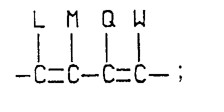
jedes R₄, R₅ und R₆ unabhängig Wasserstoff oder C₁-C₄-Alkyl ist;
p eine ganze Zahl 3 oder 4 ist und
jedes L, M, Q und W unabhängig Wasserstoff, Halogen, C₁-C₄-Alkyl, C₁-C₄-Haloalkyl, C₁-C₄-Alkoxy, C₁-C₄-Haloalkoxy oder Nitro ist;
mit der Maßgabe, daß, wenn jedes der R₁, R₂ und R₃ Wasserstoff oder t-Butyl ist, R kein Halogen sein kann; und ferner mit der Maßgabe, daß, wenn X, Y, R₁, R₂ und R₃ Wasserstoff sind, R Hydroxy ist; mit Ausnahme einer Verbindung, in der n = m = 3, X = Y = Cl, R = OH, R₁ = R₂ = R₃= H ist.

9. Verbindung nach Anspruch 8, in der
jedes X und Y unabhängig Halogen, C₁-C₈-Alkyl oder C₁-C₈-Haloalkyl ist;
jedes m und n unabhängig eine ganze Zahl 0, 1 oder 2 ist;
jedes R₁, R₂ und R₃ unabhängig Wasserstoff, C₁-C₈-Alkyl, C₁-C₈-Haloalkyl, Halogen, Cyano, C(O)R₄ oder Phenyl ist, und R₂ und R₃, wenn sie zusammengenommen werden, einen Ring bilden können, in dem R₂R₃ durch die Struktur dargestellt wird: -(CH₂)₄- oder 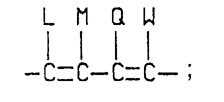
R₄ C₁-C₄-Alkyl ist und
jedes L, M, Q und W unabhängig Wasserstoff, Halogen, C₁-C₄-Alkyl, C₁-C₄-Haloalkyl oder Nitro ist.

## Revendications

1. Procédé de prévention, de contrôle ou d'amélioration d'une maladie causée par un champignon phytopathogène, qui comprend la mise en contact dudit champignon avec une quantité efficace à titre de fongicide d'un composé ayant la formule structurelle 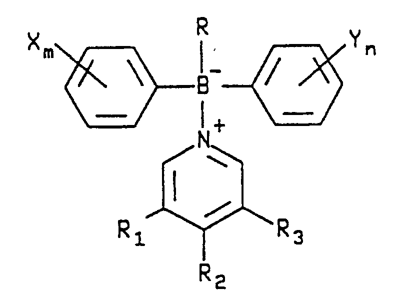 dans laquelle
X et Y sont chacun indépendamment un halogène, un alkyle en C₁ - C₈, un halogénoalkyle en C₁ - C₈, un alcoxy en C₁ - C₈ ou un halogénoalcoxy en C₁ - C₈;
m et n sont chacun indépendamment un entier égal à 0, 1, 2 ou 3;
R est un alkyle en C₁ - C₈, un alcoxy en C₁ - C₈, un halogène ou un hydroxy;
R₁, R₂ et R₃ sont chacun indépendamment un hydrogène, un alkyle en C₁ - C₈, un halogénoalkyle en C₁ - C₈, un alcoxy en C₁ - C₈, un halogénoalcoxy en C₁ - C₈, un halogène, un cyano, un nitro, C(O)R₄, NR₅R₆ ou un phényle éventuellement substitué avec un à trois halogènes, un alkyle en C₁ - C₄, un halogénoalkyle en C₁ - C₄, un alcoxy en C₁ - C₄, un halogénoalcoxy en C₁ - C₄ ou des groupes NR₅R₆, et lorsqu'ils sont pris conjointement, R₂ et R₃ peuvent former un cycle dans lequel R₂R₃ est représenté par la structure : -(CH₂)ₚ- ou 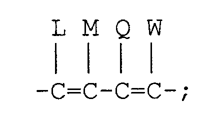
R₄, R₅ et R₆ sont chacun indépendamment un hydrogène ou un alkyle en C₁ - C₄;
p est un entier égal à 3 ou 4; et
L, M, Q et W sont chacun indépendamment un hydrogène, un halogène, un alkyle en C₁ - C₄, un halogénoalkyle en C₁ - C₄, un alcoxy en C₁ - C₄, un halogénoalcoxy en C₁ - C₄ ou un nitro.

2. Procédé selon la revendication 1, dans lequel
X et Y sont chacun indépendamment un halogène, un alkyle en C₁ - C₈ ou un halogénoalkyle en C₁ - C₈;
m et n sont chacun indépendamment un entier égal à 0, 1 ou 2;
R₁, R₂ et R₃ sont chacun indépendamment un hydrogène, un alkyle en C₁ - C₈, un halogénoalkyle en C₁ - C₈, un halogène, un cyano, C(O)R₄ ou un phényle, et lorsqu'ils sont pris conjointement, R₂ et R₃ peuvent former un cycle dans lequel R₂R₃ est représenté par la structure: -(CH₂)₄- ou 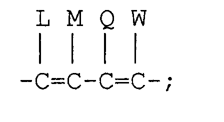
R₄ est un alkyle en C₁ - C₄; et
L, M, Q et W sont chacun indépendamment un hydrogène, un halogène, un alkyle en C₁ - C₄, un halogénoalkyle en C₁ - C₄ ou un nitro.

3. Procédé selon la revendication 2 dans lequel
X et Y sont chacun indépendamment un halogène ou un alkyle en C₁ - C₈;
R est un alkyle en C₁ - C₈;
R₁, R₂ et R₃ sont chacun indépendamment un hydrogène, un alkyle en C₁ - C₈, un halogène, un cyano, C(O)R₄ ou un phényle, et lorsqu'ils sont pris conjointement R₂ et R₃ peuvent former un cycle dans lequel R₂R₃ est représenté par la structure: -(CH₂)₄- ou -CL=CH-CH=CH-; et
L est un hydrogène ou un nitro.

4. Procédé pour protéger une plante, une graine de plante ou un tubercule contre une infestation et une maladie fongiques, ou contre une attaque par des insectes ou des acariens, qui comprend l'application sur la plante, la graine de la plante ou le tubercule, ou au niveau du milieu ou de l'eau dans lequel elle est cultivée, d'une quantité efficace à titre de fongicide, d'insecticide ou d'acaricide d'un composé possédant la formule structurelle 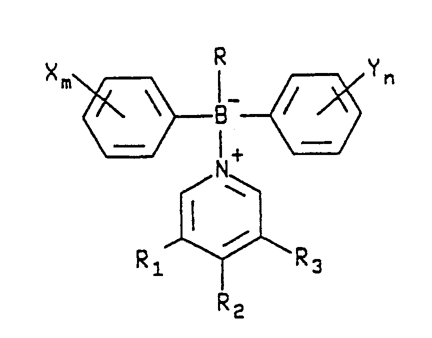 dans laquelle
X et Y sont chacun indépendamment un halogène, un alkyle en C₁ - C₈, un halogénoalkyle en C₁ - C₈, un alcoxy en C₁ - C₈ ou un halogénoalcoxy en C₁ - C₈;
m et n sont chacun indépendamment un entier égal à 0, 1, 2 ou 3;
R est un alkyle en C₁ - C₈, un alcoxy en C₁ - C₈, un halogène ou un hydroxy;
R₁, R₂ et R₃ sont chacun indépendamment un hydrogène, un alkyle en C₁ - C₈, un halogénoalkyle en C₁ - C₈, un alcoxy en C₁ - C₈, un halogénoalcoxy en C₁ - C₈, un halogène, un cyano, un nitro, C(O)R₄, NR₅R₆ ou un phényle éventuellement substitué par un à trois halogènes, un alkyle en C₁ - C₄, un halogénoalkyle en C₁ - C₄, un alcoxy en C₁ - C₄, un halogénoalcoxy en C₁ - C₄ ou des groupes NR₅R₆, et lorsqu'ils sont pris conjointement, R₂ et R₃ peuvent former un cycle dans lequel R₂R₃ est représenté par la structure: -(CH₂)ₚ- ou 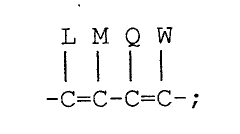
R₄, R₅ et R₆ sont chacun indépendamment un hydrogène ou un alkyle en C₁ - C₄;
p est un entier égal à 3 ou 4; et
L, M, Q et W sont chacun indépendamment un hydrogène, un halogène, un alkyle en C₁ - C₄, un halogénoalkyle en C₁ - C₄, un alcoxy en C₁ - C₄, un halogénoalcoxy en C₁ - C₄ ou un nitro.

5. Procédé selon la revendication 4 dans lequel
X et Y sont chacun indépendamment un halogène, un alkyle en C₁ - C₈, un halogénoalkyle en C₁ - C₈;
m et n sont chacun indépendamment un entier égal à 0, 1 ou 2;
R₁, R₂ et R₃ sont chacun indépendamment un hydrogène, un alkyle en C₁ - C₈, un halogénoalkyle en C₁ - C₈, un halogène, un cyano, C(O)R₄, ou un phényle, et lorsqu'ils sont pris conjointement, R₂ et R₃ peuvent former un cycle dans lequel R₂R₃ est représenté par la structure: -(CH₂)₄- ou 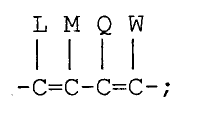
R₄ est un alkyle en C₁ - C₄; et
L, M, Q et W sont chacun indépendamment un hydrogène, un halogène, un alkyle en C₁ - C₄, un halogénoalkyle en C₁ - C₄ ou un nitro.

6. Composition pour contrôler les champignons phytopathogènes, les insectes ou les acariens, qui comprend un véhicule inerte, liquide ou solide, et une quantité efficace à titre de fongicide, d'insecticide ou d'acaricide d'un composé possédant la formule structurelle 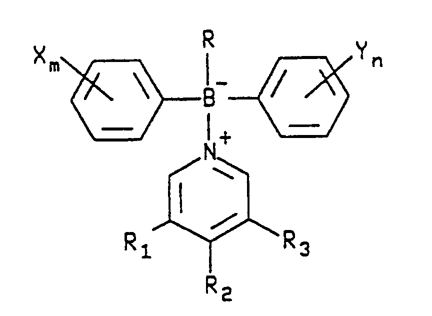 dans laquelle
X et Y sont chacun indépendamment un halogène, un alkyle en C₁ - C₈, un halogénoalkyle en C₁ - C₈, un alcoxy en C₁ - C₈ ou un halogénoalcoxy en C₁ - C₈;
m et n sont chacun indépendamment un entier égal à 0, 1, 2 ou 3;
R est un alkyle en C₁ - C₈, un alcoxy en C₁ - C₈, un halogène ou un hydroxy;
R₁, R₂ et R₃ sont chacun indépendamment un hydrogène, un alkyle en C₁ - C₈, un halogénoalkyle en C₁ - C₈, un alcoxy en C₁ - C₈, un halogénoalcoxy en C₁ - C₈, un halogène, un cyano, un nitro, C(O)R₄, NR₅R₆ ou un phényle éventuellement substitué avec un à trois halogènes, un alkyle en C₁ - C₄, un halogénoalkyle en C₁ - C₄, un alcoxy en C₁ - C₄, un halogénoalcoxy en C₁ - C₄ ou des groupes NR₅R₆, et lorsqu'ils sont pris conjointement, R₂ et R₃ peuvent former un cycle dans lequel R₂R₃ est représenté par la structure: -(CH₂)ₚ- ou 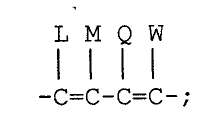
R₄, R₅ et R₆ sont chacun indépendamment un hydrogène ou un alkyle en C₁ - C₄;
p est un entier égal à 3 ou 4; et
L, M, Q et W sont chacun indépendamment un hydrogène, un halogène, un alkyle en C₁ - C₄, un halogénoalkyle en C₁ - C₄, un alcoxy en C₁ - C₄, un halogénoalcoxy en C₁ - C₄ ou un nitro;
à condition que lorsque chacun des substituants R₁, R₂ et R₃ est un hydrogène ou un t-butyle, alors R doit être différent d'un halogène; et encore à condition que lorsque X, Y, R₁, R₂ et R₃ sont un hydrogène, alors R soit un hydroxy; à l'exception du composé dans lequel n = m = 3, X = Y = Cl, R = OH, R₁ = R₂ = R₃ = H.

7. Procédé permettant de contrôler les insectes et les acariens, qui comprend l'étape consistant à mettre en contact lesdits insectes et acariens, leur lieu de reproduction, leur réserve en nourriture ou leur habitat avec une quantité efficace à titre d'insecticide ou d'acaricide d'un composé possédant la formule structurelle 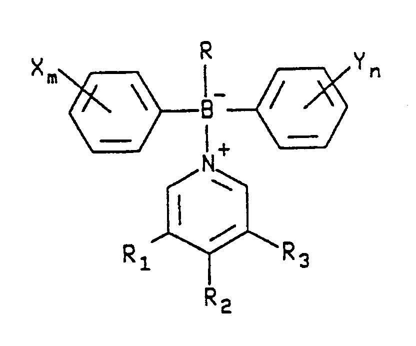 dans laquelle
X et Y sont chacun indépendamment un halogène, un alkyle en C₁ - C₈, un halogénoalkyle en C₁ - C₈, un alcoxy en C₁ - C₈ ou un halogénoalcoxy en C₁ - C₈;
m et n sont chacun indépendamment un entier égal à 0, 1, 2 ou 3;
R est un alkyle en C₁ - C₈, un alcoxy en C₁ - C₈, un halogène ou un hydroxy;
R₁, R₂ et R₃ sont chacun indépendamment un hydrogène, un alkyle en C₁ - C₈, un halogénoalkyle en C₁ - C₈, un alcoxy en C₁ - C₈, un halogénoalcoxy en C₁ - C₈, un halogène, un cyano, un nitro, C(O)R₄, NR₅R₆ ou un phényle éventuellement substitué par un à trois halogènes, un alkyle en C₁ - C₄, un halogénoalkyle en C₁ - C₄, un alcoxy en C₁ - C₄, un halogénoalcoxy en C₁ - C₄ ou des groupes NR₅R₆, et lorsqu'ils sont pris conjointement, R₂ et R₃ peuvent former un cycle dans lequel R₂R₃ est représenté par la structure: -(CH₂)ₚ- ou 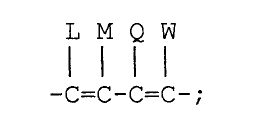
R₄, R₅ et R₆ sont chacun indépendamment un hydrogène ou un alkyle en C₁ - C₄;
p est un entier égal à 3 ou 4; et
L, M, Q et W sont chacun indépendamment un hydrogène, un halogène, un alkyle en C₁ - C₄, un halogénoalkyle en C₁ - C₄, un alcoxy en C₁ - C₄, un halogénoalcoxy en C₁ - C₄ ou un nitro.

8. Composé possédant la formule structurelle 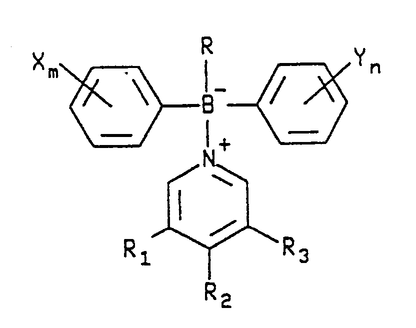 dans laquelle
X et Y sont chacun indépendamment un halogène, un alkyle en C₁ - C₈, un halogénoalkyle en C₁ - C₈, un alcoxy en C₁ - C₈ ou un halogénoalcoxy en C₁ - C₈;
m et n sont chacun indépendamment un entier égal à 0, 1, 2 ou 3;
R est un alkyle en C₁ - C₈, un alcoxy en C₁ - C₈, un halogène ou un hydroxy;
R₁, R₂ et R₃ sont chacun indépendamment un hydrogène, un alkyle en C₁ - C₈, un halogénoalkyle en C₁ - C₈, un alcoxy en C₁ - C₈, un halogénoalcoxy en C₁ - C₈, un halogène, un cyano, un nitro, C(O)R₄, NR₅R₆ ou un phényle éventuellement substitué avec un à trois halogènes, un alkyle en C₁ - C₄, un halogénoalkyle en C₁ - C₄, un alcoxy en C₁ - C₄, un halogénoalcoxy en C₁ - C₄ ou des groupes NR₅R₆, et lorsqu'ils sont pris conjointement, R₂ et R₃ peuvent former un cycle dans lequel R₂R₃ est représenté par la structure: -(CH₂)ₚ- ou 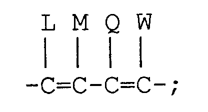
R₄, R₅ et R₆ sont chacun indépendamment un hydrogène ou un alkyle en C₁ - C₄;
p est un entier égal à 3 ou 4; et
L, M, Q et W sont chacun indépendamment un hydrogène, un halogène, un alkyle en C₁ - C₄, un halogénoalkyle en C₁ - C₄, un alcoxy en C₁ - C₄, un halogénoalcoxy en C₁ - C₄ ou un nitro;
à condition que lorsque chacun des substituants R₁, R₂ et R₃ est un hydrogène ou un t-butyle, alors R doit être différent d'un halogène; et également à condition que lorsque X, Y, R₁, R₂, et R₃ sont un hydrogène, alors R soit un hydroxy; à l'exception du composé dans lequel n = m = 3, X = Y = Cl, R = OH, R₁ = R₂ = R₃ = H.

9. Composé selon la revendication 8 dans lequel
X et Y sont chacun indépendamment un halogène, un alkyle en C₁ - C₈ ou un halogénoalkyle en C₁ - C₈;
m et n sont chacun indépendamment un entier égal à 0, 1 ou 2;
R₁, R₂ et R₃ sont chacun indépendamment un hydrogène, un alkyle en C₁ - C₈, un halogénoalkyle en C₁ - C₈, un halogène, un cyano, C(O)R₄ ou un phényle, et lorsqu'ils sont pris conjointement, R₂ et R₃ peuvent former un cycle dans lequel R₂R₃ est représenté par la structure: -(CH₂)₄- ou 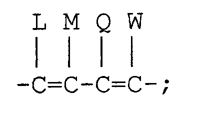
R₄ est un alkyle en C₁ - C₄; et
L, M, Q et W sont chacun indépendamment un hydrogène, un halogène, un alkyle en C₁ - C₄, un halogénoalkyle en C₁ - C₄ ou un nitro.
